# EUROPEAN PATENT APPLICATION

(11) **EP 4 269 939 A1**
(43) Date of publication of application: **01.11.2023**
(21) Application number: 22305615.1
(22) Date of filing: 26.04.2022
(51) Int. Cl.: G01B 11/24, G01N 21/952, G01R 31/12, G06T 7/00, H02G 1/14, H01R 43/28, G01R 31/08

(54) **ASIT LASER SCANNING ON CABLE JOINTS**

(71) Applicant: Nexans, 92400 Courbevoie (FR)
(72) Inventor: DOEDENS, Espen, 1788 HALDEN (NO); FRISK, Nils-Bertil, 45297 STROMSTAD (SE)
(74) Representative: Ipsilon

(57) **Abstract**

A method and system for inspecting cable joints during production and/or installation, where a non-contact surface scanner captures a continuous 3D surface geometry measurement of a layer of a joint by moving a non-contact surface scanner about the cable over the surface of the layer. Multiple continuous 3D surface geometry measurement of a provided layer are stored and a processor connected to the non-contact surface scanner inspect the captured 3D surface geometry to evaluate the quality of the layer and provide at least one quality parameter, and merge several captured 3D surface geometries to obtain a full 3D map of the section of the cable.

## Description

### Technical field

The present invention relates to high voltage and medium voltage cables, in particular to a system and method for inspecting cable joints during production and/or installation.

### Background

A high voltage (HV) and medium voltage (MV) cable is used for electric power transmission at medium and high voltage, e.g. above 1 000 V. Such cables include a conductor and an insulation. The insulation may consist of polymers or polyethylene, including ethylene propylene rubber (EPR) and cross-linked polyethylene (XLPE). At inner and outer sides of the insulation semiconducting layers are fused to the insulation. The semiconducting layers prevent air-filled cavities between the metal conductors and the dielectric so that small electric discharges cannot arise and endanger the insulation material. The insulation is usually also covered by a copper or aluminum wire screen, or a lead or aluminum or copper jacket, or combinations thereof. This metallic screen or jacket is followed by a polymeric (e.g. PE or PVC) outer sheath.

The cables are manufactured in cable manufacturing lines using extrusion. The quality control and meeting product specifications are very important in cable production. A failure due to dielectric breakdown in the HV-cable may cause a break to power supply. For instance, high voltage cables are used for long length connections for power distribution and power transmission. The manufacturing quality is monitored during the operation of the cable manufacturing line to assure the quality of the final product. The final product is usually a assembly comprising cable lengths connected together as well as connected accessories such as terminations joints, GIS terminations, asymmetric joints, MV joints, MV terminations, MV plugin terminations, etc.

Flexible factory joints are essential for HVAC and HVDC submarine applications in order to splice together manufacturing lengths into delivery lengths. Such joints are made manually by means of reconstructing the layers of the cable one by one. This can, in a typical case, involve steps such as welding the conductors, vulcanization/forming/fusing the inner semiconductive material, the insulation, the outer semiconducting material, and lastly adding the additional layers over the joint. This process is labor intensive and due to the variety of different geometric designs needed, manual labor as well as manual inspection of each layer added is common practice. Factory jointing thus requires highly skilled and trained professionals, which are capable of following complex procedures and are able to detect any geometry or attribute that may deviate from the design requirements during the full process of making the joints.

This manual quality control (QC) approach creates the following issues:
- Each layer added takes long time to make, often one operator makings the layer, and a different operator is doing the inspection (on the new work shift).
- Inspection and quality is fully in the hand of the operators.
- Manual check of dimensions, by means of rulers, calipers, ultrasound is time consuming thus only certain attributes are controlled only on strategically selected positions.
- Electrical QC done is only done after completion of the insulation layer, thus a long feedback loop between manufacturing and testing/QC exists.
- There is thus no tool that provides direct, detailed geometric feedback to the operator.

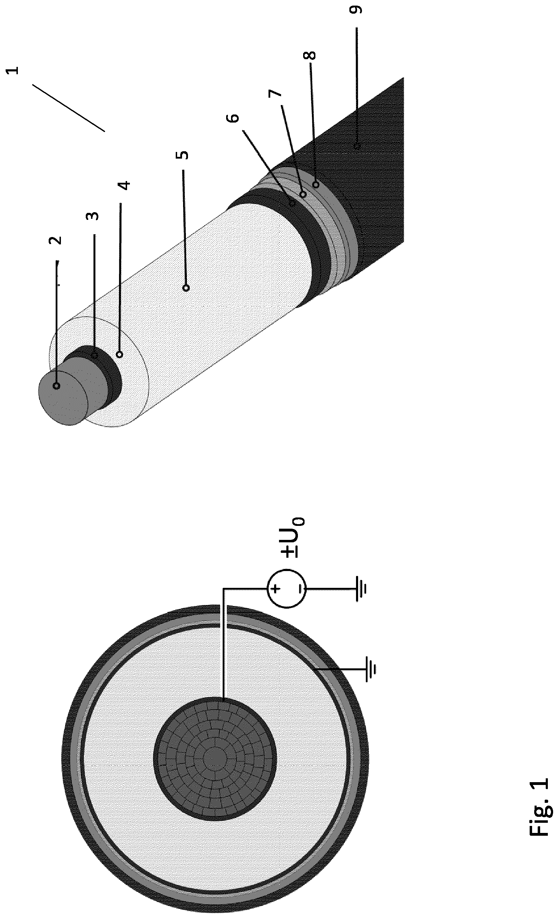

Fig. 1 show an exemplary HV-cable 1. In the figure the outer sheath 9, the lead sheath 8, swelling tapes 7 and the outer semiconducting screen 6 have been removed at the end of the cable, uncovering the conductor 2, the inner semiconducting screen 3 and the insulation 4 having a surface 5.

EP3901571 discloses a system and a method for determining a quality of a surface of a high voltage cable end using a 3D scanner. The method comprises moving a non-contact surface scanner about the cable end, measuring distance to the surface over the area of the surface by sequentially measuring a plurality of sub-areas of the area of the surface, creating a continuous 3D surface geometry measurement of the surface of the cable end and comparing, using the continuous 3D surface geometry measurement with at least one surface geometry acceptance threshold determining the quality of the surface of the high voltage cable end.

The object of the invention is to provide a system and a method for inspecting cable joints during production and/or installation that solves or at least mitigate the problems of prior art.

The object of the invention is achieved by means of the patent claims.

In the exemplary embodiments, various features and details are shown in combination. The fact that several features are described with reference to a particular example should not be construed as implying that those features be necessity have to be included together in all the embodiments of the invention.

Conversely, features that are described with reference to different embodiments should not be construed as mutually exclusive. As those skilled in the art will readily understand, embodiments that incorporate any subset of features described herein and that are not expressly interdependent have been contemplated by the inventor and are part of the intended disclosure. However, explicit descriptions of all such embodiments would not contribute to the understanding of the principles of the invention, and consequently some permutations have been omitted for the sake of simplicity.

The invention provides an inspection method that can generate a go/no go criteria on the performed operation on-site. This provides the capability of tracking the geometries in 3D of each joint and subsequent repair of the product. The data can be stored and accessed during the full lifetime of the cable system. The generated data is feasible for use in future physics based digital twin models.

The 3D data can also be easily transferred to an external expert which can evaluate the quality of the joint, and provide the go/no go criteria remotely. These measurement results will also add value to the cable systems in that the data can be stored and provided to for future reference and health checks of the cable system.

In one embodiment, a method for inspecting cable joints during production and/or installation comprises:
a) prepare a layer of a joint,
b) capture and store a set of 3-dimensional (3D) surface geometry measurement data of the prepared layer by moving a 3D surface scanner about the cable over an area of interest,
c) inspect the captured 3D surface from step a) to evaluate the quality of the layer and provide at least one quality parameter,
d) compare the quality parameter to a predetermined tolerance and if the quality parameter deviates from the predetermined tolerance, provide a deviation feedback.

The steps a) to d) can then be repeated until the joint is completed.

Based on the deviation feedback the prepared layer of step a) can be accepted or adjusted, or the layer may be rejected and the operator must remove the layer and do it over, whereafter the scanning process continues by repeating steps b)-d) for renewed inspection and qualification. In cases of adjustment or rejection, ie. if the quality parameter deviates from the predetermined tolerance and a deviation feedback is provided, the set of 3D surface geometry measurement data is rejected.

The non-rejected sets of 3D surface geometry measurement data from each repeated step b)-d) can then be merged to obtain a full 3D map of the joint section of the cable. This 3D map can be stored and used for later reference.

The 3D surface geometry measurement data can be represented by a data point cloud, where the data points in the data point cloud can be further processed to provide a representation of the cable. A data point cloud is a set of data points in space. The points may represent a 3D shape or object. Each point position has its set of Cartesian coordinates (X, Y, Z). Point clouds are generally produced by 3D scanners or by photogrammetry software, which measure many points on the external surfaces of objects around them. As the output of 3D scanning processes, point clouds are used for many purposes, including to create 3D CAD models for manufactured parts, for metrology and quality inspection, and for a multitude of visualization, animation, rendering and mass customization applications.

While point clouds can be directly rendered and inspected, point clouds are often converted to polygon mesh or triangle mesh models, NURBS surface models, or CAD models through a process commonly referred to as surface reconstruction.

There are many techniques for converting a point cloud to a 3D surface. Some approaches, like Delaunay triangulation, alpha shapes, and ball pivoting, build a network of triangles over the existing vertices of the point cloud, while other approaches convert the point cloud into a volumetric distance field and reconstruct the implicit surface so defined through a marching cubes algorithm.

The invention enables a fast and reliable inspection of all internal interfaces within a factory joint. For XLPE the scanned surfaces retain their geometry within the joint when vulcanizing the next layer, but also for other materials, where this is not the case, there should be correlation between original geometry and electrical performance. It enables the possibility to automatically generate quality control reports and to store the 3D data for the products full life cycle (for industry 4.0 and for physics based Digital twin model use).

In another embodiment a system for inspecting cable joints during production and/or installation is provided. The system comprising:
- a non-contact surface scanner, for capturing a continuous 3D surface geometry measurement of a layer of a joint by moving a non-contact surface scanner about the cable over the surface of the layer,
- a memory unit for storing multiple continuous 3D surface geometry measurement of a layer,
- a processor connected to the non-contact surface scanner, configured to inspect the captured 3D surface geometry to evaluate the quality of the layer and provide at least one quality parameter, and to merge several captured 3D surface geometries to obtain a full 3D map of the section of the cable.

The invention will now be described in more detail by means of examples and with reference to the figures.
- Fig. 1: illustrates a high volt cable end.
- Fig. 2: illustrates an example of a 3D surface geometry measurement of a surface of a cable.
- Fig. 3: shows an example of a flexible factory joint.
- Fig. 4: shows a flow chart of an exemplary method according to the invention.
- Fig. 5: shows an example of 3D laser scan data.

Figure 1 illustrates a detailed view of the high voltage cable end. As shown an exemplary high voltage cable end 1. The outer sheath 9, the lead sheath 8, swelling tapes 7 and the outer semiconducting screen 6 have been removed, leaving the conductor 2, the inner semiconducting screen 3 and the insulation 4. The surface 5 of the insulation 4 is inspected to ensure that there are no irregularities, before a high voltage cable accessory component, such as high voltage joint, termination for the cable, a rubber joint, is slipped over it.

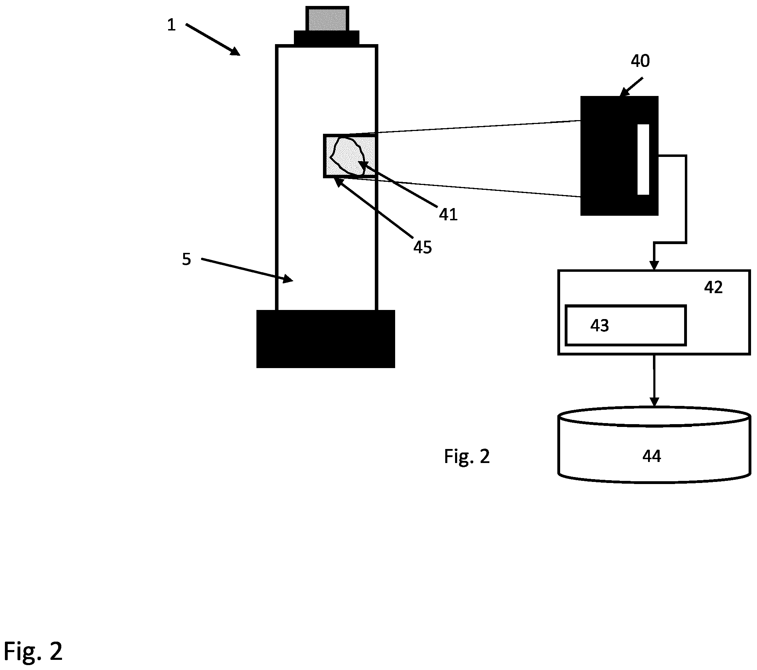

Fig. 2 is a schematic illustration of a system according to the present invention for scanning the surface 5 of a high voltage cable 1. The sizes of various object of the illustration are not in scale. The system comprises a non-contact surface scanner 40. The non-contact surface scanner 40 is directable to an area of interest 45 which comprises a damaged section 41. In one embodiment, the non-contact surface scanner 40 may be a 3D laser scanner. The non-contact surface scanner 40 is arranged to measure the distance to the surface 5 of the area of interest. In the example in the figure, the field-of-view of the non-contact surface scanner corresponds to the area of interest, but the area of interest 45 on the surface 5 may be larger or smaller by the field-of-view or scanning area of the non-contact surface scanner 40. The field-of-view may be round, rectangular, linear or any other shape as determined by the non-contact surface scanner. The non-contact surface scanner 40 is movable around the cable 1 such that the surface 5 of the cable 1 is covered by a plurality of sub-areas in order to ensure that the entire area of interest is scanned. The size of plurality of sub-areas may vary, for example by varying the distance between the non-contact surface scanner 10 and the cable 1. In one embodiment the non-contact surface scanner 10 is freely movable in any direction around the cable 1, such as a handheld 3D laser scanner. The non-contact surface scanner 40 knows its position and direction in 3D space, for example by recognizing a plurality of markers (not shown) positioned on the surface 5. The markers may be stickers or sterile clamps with specific patterns or markers thereon. The markers will result in "NaN" (not a number = empty) areas underneath them, however, the scan can be paused, markers/clamps relocated and then the measurement can also scan the area under the markers. In another embodiment the non-contact surface scanner 40 may be mounted to a jig, e.g. mountable to the HV-cable, such that the non-contact surface scanner 40 may be moved up/down and around the surface 5 to completely fill the area of interest 5 with sub-areas. In this way, using markers may be avoided.

The illustrated system also comprises an analysis part 42. The analysis part 42 is in communication with the non-contact surface scanner 40 over a wired or wireless communication link. In one embodiment, at least parts of the analysis part 42 may be comprised in the non-contact surface scanner 40. The analysis part 42 comprises a processor 43 adapted to process measurement data from the non-contact surface scanner 40 for each of the plurality of sub-areas to create a continuous 3D surface geometry measurement of the area of interest 45, and thus the damage 41. The continuous 3D surface geometry measurement is processed to evaluate if there is a damage in the area of interest, and can also create an image of the damage when a damage is present in the scanned surface.

In one embodiment, the analysis part can provide a go/no go evaluation. In this way an operator may receive a go or a no go after the scan is performed, allowing or disallowing the operator to proceed with the cable. The criterium for providing go/no go may be based on at least one of a height variation threshold, a surface derivative threshold, a peeling wave threshold and/or at least one of an area of a cut, a depth of a cut, and a slope of a cut.

In one embodiment, the analysis part 42 is adapted to transmit the continuous 3D surface geometry measurement to a storage device 44 as a 3D topographic map of the area of interest 45. The analysis part 42 is in communication with the storage device 44 over a wired or wireless communication link. The storage device 44 may be on on-premise server or cloud server. The 3D topographic map of the surface 5 of the cable 1 on the server 44 may be accessible to users and clients for future reference of the cable system.

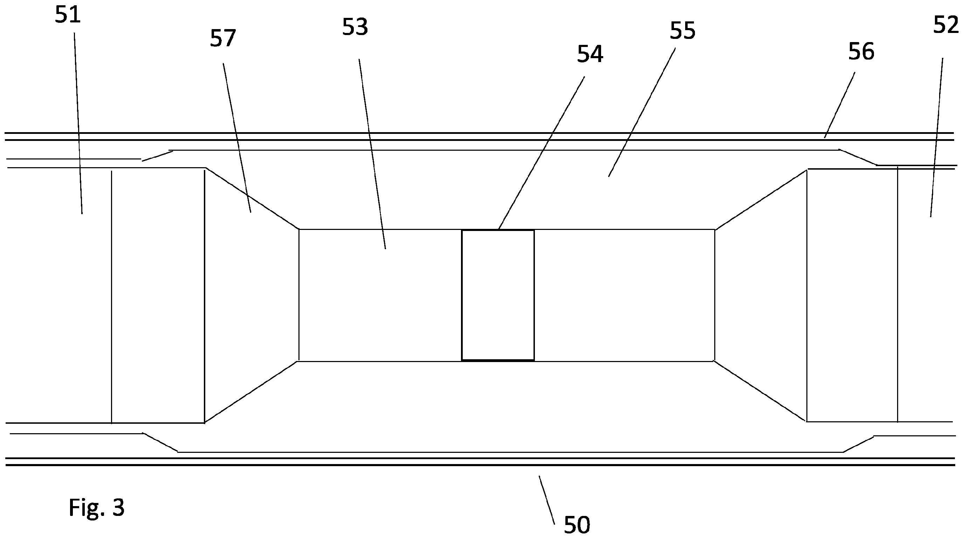

Figure 3 illustrates an example of a flexible factory joint 50 joining a first cable 51 and a second cable 52. The joint is provided by means of steps such as welding the conductors 53 with weld 54, vulcanization/forming/fusing the inner semiconductive material, the insulation 55, the outer semiconducting material, and lastly adding the additional layers 56 over the joint.

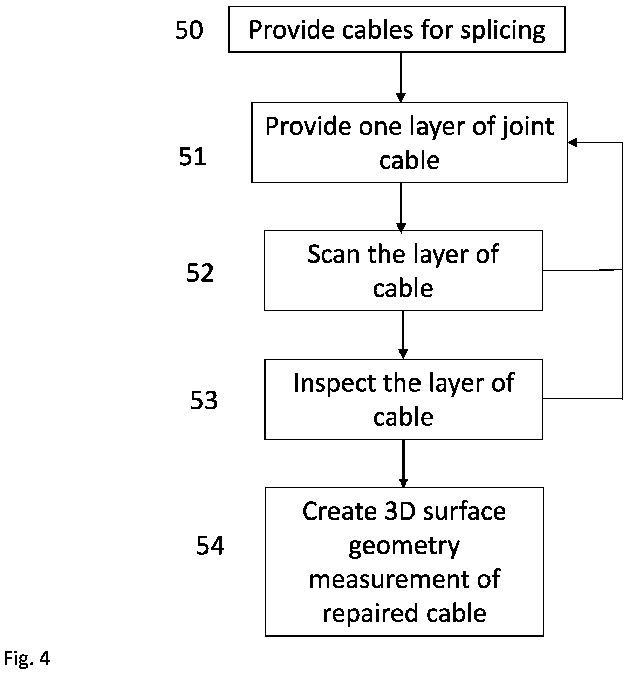

Figure 4 shows a flow chart of an exemplary method for inspecting cable joints during production and/or installation, for example a joint as illustrated in figure 3.

In step 50, the cables 51,52 for splicing is provided. The cable ends have for example been inspected as described for figure 2 above, thus providing knowledge of the different parts of the cable.

In step 51, one layer of the joint is provided. This step may comprise one of
- The bare, welded together conductors 53 and the rough cable ends connected to it; revealing the weld 54, conductor geometries and dimensions of the original cable insulation,
- The vulcanized inner semiconductive material and rough cones 57,
- The geometrically prepared inner semiconductive material as well as the fine cones on each side, ready for the next process; insulation vulcanization,
- the just vulcanized insulation layer,
- The prepared insulation surface and the two sides ready for the next process; vulcanization of outer semiconductive material 55,

- The vulcanized outer semiconductive layer,
- Any further layers added over the joint; mechanical protection 56, tapes, lead sheath, heat shrink sleeves, etc.

In step 52, the layer provided in step 51 is scanned by moving a 3D surface scanner about the cable over the area of interest, and a set of 3-dimensional (3D) surface geometry measurement data of the area of interest is captured and stored.

In step 53 the scan from step 52 is inspected before proceeding with the next layer. This can be performed manually or automatically and can provide feedback to the operator on the quality of each layer. This will improve the quality.

The inspection evaluates the quality of the layer and can provide at least one quality parameter. The quality parameter can be compared to a predetermined tolerance and if the quality parameter deviates from the predetermined tolerance, a deviation feedback can be provided. The deviation feedback can be used to modify the layer or can give the operator instructions to remove the layer and redo the work.

The process in steps 51 to 53 are repeated until all layers have been provided and the joint is complete. The scans made during this process can be used in step 54 to create a 3D surface geometry of the repaired cable by merging all the layer scans. The 3D geometry of the cable can be stored for later use.

The 3D geometry can be used for further inspection, for example by checking critical internal layers to detect any defects, protrusions, textures, and macro-geometric deviation (in three dimensions) that may not match acceptance criteria.

Inspection step may also automatically generate inspection reports, reducing the amount of manual work. These reports can be stored internally at the manufacturer and can be accessed at a later date.

The scanned data can be stored for the full life-cycle of the product. If knowledge or algorithms improve in accuracy, the data can be re-assessed by using the new knowledge and reveal vulnerable sections or predict failure, thus enabling a more pro-active approach to maintenance of the cables.

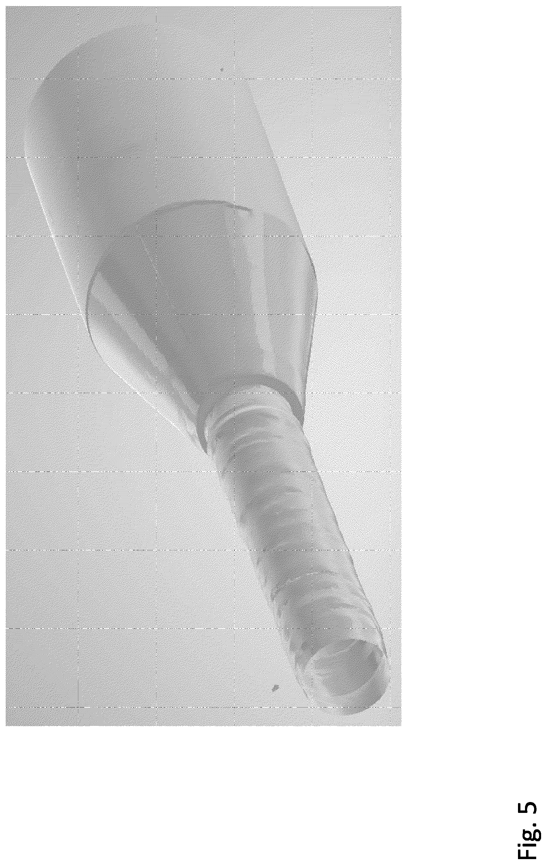

Figure 5 shows an example of 3D laser scan data (only half section visualized) of a flexible factory joint, process step after ISC vulcanization.

## Claims

1. Method for inspecting cable joints during production and/or installation comprising:
a) prepare a layer of a joint,
b) capture and store a set of 3-dimensional (3D) surface geometry measurement data of the prepared layer by moving a 3D surface scanner about the cable over an area of interest,
c) inspect the captured 3D surface from step a) to evaluate the quality of the layer and provide at least one quality parameter,
d) compare the quality parameter to a predetermined tolerance and if the quality parameter deviates from the predetermined tolerance, provide a deviation feedback.

2. Method according to claim 1, where steps a) to d) is repeated until the joint is completed.

3. Method according to claim 1, further comprising adjusting the prepared layer of step a) based on the deviation feedback and repeating steps b)-d).

4. Method according to claim 3, where, when the quality parameter deviates from the predetermined tolerance and a deviation feedback is provided, the set of 3D surface geometry measurement data is rejected.

5. Method according to claim 3, where the non-rejected sets of 3D surface geometry measurement data from each repeated step b)-d) are merged to obtain a full 3D map of the joint section of the cable.

6. A system for inspecting cable joints during production and/or installation, the system comprising:
- a non-contact surface scanner, for capturing a continuous 3D surface geometry measurement of a layer of a joint by moving a non-contact surface scanner about the cable over the surface of the layer,
- a memory unit for storing multiple continuous 3D surface geometry measurement of a layer,
- a processor connected to the non-contact surface scanner, configured to inspect the captured 3D surface geometry to evaluate the quality of the layer and provide at least one quality parameter, and to merge several captured 3D surface geometries to obtain a full 3D map of the section of the cable.
